# EUROPÄISCHE PATENTSCHRIFT

(11) **EP 3 671 693 B1**
(45) Veröffentlichungstag und Bekanntmachung des Hinweises auf die Patenterteilung: **12.10.2022**
(21) Anmeldenummer: 19211358.7
(22) Anmeldetag: 25.11.2019
(51) Int. Cl.: G08G 1/16, B60W 50/00, B60W 40/04, G08G 1/01, B60W 30/09, B60W 30/095

(54) **VERFAHREN UND FAHRERASSISTENZSYSTEM ZUM UNTERSTÜTZEN EINES FAHRERS EINES FAHRZEUGS BEIM FÜHREN DES FAHRZEUGS**
METHOD AND DRIVER ASSISTANCE SYSTEM FOR ASSISTING A DRIVER OF A VEHICLE DURING GUIDING OF THE VEHICLE
PROCÉDÉ ET SYSTÈME D'AIDE À LA CONDUITE PERMETTANT D'AIDER UN CONDUCTEUR D'UN VÉHICULE LORS DE LA CONDUITE DU VÉHICULE

(30) Priorität: 20.12.2018 DE 102018222601
(43) Veröffentlichungstag der Anmeldung: 24.06.2020
(73) Patentinhaber: Volkswagen AG, 38440 Wolfsburg (DE)
(72) Erfinder: Max, Stephan, 38518 Gifhorn (DE); Günzel, Thorben, 38118 Braunschweig (DE)

(56) Entgegenhaltungen:
- EP-A1- 2 289 754
- DE-A1-102011 113 019
- DE-A1-102012 009 297
- DE-A1-102013 213 006
- DE-A1-102016 113 903

## Beschreibung

Die vorliegende Erfindung betrifft ein Verfahren zum Unterstützen eines Fahrers eines Fahrzeugs beim Führen des Fahrzeugs. Bei dem Verfahren wird das Umfeld des Fahrzeugs erfasst. Die Umfelderfassung umfasst dabei den Verlauf von Fahrwegen sowie Bewegungsdaten anderer Verkehrsteilnehmer. Ferner betrifft die Erfindung ein Fahrerassistenzsystem zum Unterstützen eines Fahrers eines Fahrzeugs beim Führen des Fahrzeugs. Das System umfasst eine Umfelderfassungseinrichtung zum Erfassen des Umfelds des Fahrzeugs. Die Umfelderfassungseinrichtung ist ausgebildet, den Verlauf von Fahrwegen sowie Bewegungsdaten anderer Verkehrsteilnehmer zu erfassen.

Aus der DE 10 2012 208 254 A1 ist ein Verfahren zum Erstellen eines aktuellen Situationsabbildes in einem Verkehrsbereich bekannt. Dabei werden Umfelddaten, Kartendaten und/oder Positionsdaten einer Vielzahl von Fahrzeugen, die eine lokal begrenzte Situation beschreiben, an eine Datenbank gesendet. Die Umfelddaten werden mittels Umfeldsensoren oder Fahrzeugsensoren erfasst, die Kartendaten werden aus einem digitalen Speicher ausgelesen und die Positionsdaten werden mittels eines globalen Satellitenpositionssystems bestimmt. Bei dem Verfahren werden die an die Datenbank übertragenen Daten mit einem in der Datenbank bereits vorhandenen Situationsabbild kontinuierlich zu einem aktuellen Situationsabbild fusioniert.

Aus der DE 10 2015 219 467 A1 ist ein Verfahren zum Betreiben eines zentralen Servers bekannt, welcher eine zentrale Verwaltung von Verkehrsregeln enthaltenden Regelkarten ermöglicht. Die Regelkarte kann von dem zentralen Server an ein Fahrzeug gesandt werden. Ferner kann von einem Fahrzeug der Umgebungszustand mittels einer Anzahl von Umfeldsensoren erkannt werden, Verkehrsregeln basierend auf dem Umgebungszustand abgeleitet werden, eine Regelkarte auf Basis zumindest der Verkehrsregeln erzeugt werden und die Regelkarte an den zentralen Server gesandt werden.

Aus der DE 10 2016 113 903 A1 ist ein System bekannt, mit dem das Fahrverhalten anderer Fahrzeuge gesammelt wird. Das Fahrverhalten wird dann analysiert und es kann die Wahrscheinlichkeit einer möglichen geplanten Fahrstrecke bestimmt werden.

Aus der DE 103 34 620 A1 ist ein Verfahren zum Unterstützen des Fahrers eines Fahrzeugs in aktuellen Verkehrssituationen im Verkehr bekannt. Bei dem Verfahren werden Informationen über Verkehrszeichen in Synchronisation mit der aktuellen Fahrbewegung erfasst. Verkehrszeicheninformationen werden dann mit Relevanz-, Priorisierungs-, Straßen/Fahrzeugtopologie- und Konsistenzaspekten bewertet, so dass unterstützende Hinweise an den Fahrer ausgegeben werden können.

Aus der DE 10 2012 009 297 A1 ist ein Verfahren bekannt, bei dem prognostizierte potenzielle Kollisionsgefahren zwischen einem Fahrzeug und anderen Verkehrsteilnehmern ermittelt werden, um einen Fahrer des Fahrzeugs zu unterstützen. Um ein voraussichtliches Fahrmanöver eines anderen Verkehrsteilnehmers vorherzusagen, werden Informationen über die Verkehrsregeln im erfassten Umfeld verwendet.

Schließlich beschreibt die DE 10 2011 082 761 A1 ein Verfahren, mit dem eine Fahrzeugfahrcharakteristik erfasst und gespeichert werden kann.

Beim Führen des Fahrzeugs müssen die Bewegungen anderer Verkehrsteilnehmer beachtet werden. Es ist insbesondere erforderlich, dass Kollisionen mit anderen Verkehrsteilnehmern vermieden werden. Dies gilt sowohl für einen menschlichen Fahrer als auch für eine teil- oder vollautomatisierte Fahrt des Fahrzeugs mittels eines Fahrerassistenzsystems oder eines autonomen Fahrzeugs. Mittels des erfindungsgemäßen Verfahrens bzw. des erfindungsgemäßen Fahrerassistenzsystems soll der Fahrer eines Fahrzeugs insbesondere in solchen Verkehrssituationen unterstützt werden, bei denen es zu einer Kollision mit einem anderen sich bewegenden Verkehrsteilnehmer kommen kann. Die Unterstützung des Fahrers kann dabei auch darin liegen, dass einer Steuervorrichtung für eine teilautomatisierte oder vollautomatische Fahrt ein Steuersignal zur Verfügung gestellt wird.

Der vorliegenden Erfindung liegt daher die Aufgabe zugrunde, ein Verfahren und ein Fahrerassistenzsystem anzugeben, mit denen der Fahrer des Fahrzeugs unterstützt wird, Kollisionen mit anderen sich bewegenden Verkehrsteilnehmern zu vermeiden. Dabei soll jedoch der Fahrfluss des Fahrzeugs im Verkehrsgeschehen nicht unnötig durch Hinweise oder Eingriffe in das Bewegungsverhalten des Fahrzeugs beeinträchtigt werden.

Diese Aufgabe wird gelöst durch ein Verfahren mit den Merkmalen nach Anspruch 1.

Die Bewegungsdaten der anderen Verkehrsteilnehmer umfassen den zeitlichen Verlauf der Position eines anderen Verkehrsteilnehmers. Bei dem Verkehrsteilnehmer handelt es sich insbesondere um ein anderes Fahrzeug, einen Radfahrer oder einen Fußgänger. Der Fahrweg ist insbesondere eine Straße oder eine Fahrspur auf einer Straße. Die Fahrwege können mittels Sensoren des Fahrzeugs erfasst werden. Sie können alternativ oder zusätzlich jedoch auch mittels einer gespeicherten digitalen Karte anhand der aktuellen Position des Fahrzeugs bestimmt werden. Die Bewegungsdaten der anderen Verkehrsteilnehmer werden insbesondere mittels Sensoren des Fahrzeugs bestimmt.

Bei dem erfindungsgemäßen Verfahren wird ein voraussichtliches Fahrmanöver eines anderen Verkehrsteilnehmers vorhergesagt. Hierdurch soll eine etwaige Kollision mit diesem Verkehrsteilnehmer verhindert werden. Dabei wird das voraussichtliche Fahrmanöver des anderen Verkehrsteilnehmers nicht nur aus der aktuellen Bewegungsrichtung und -geschwindigkeit des anderen Verkehrsteilnehmers abgeleitet. Vielmehr werden auch historische Daten, die Informationen über vergangene Fahrmanöver von Verkehrsteilnehmern in dem betreffenden Umfeld enthalten, berücksichtigt, um das voraussichtliche Fahrmanöver vorherzusagen. Hierdurch kann das voraussichtliche Fahrmanöver besser abgeschätzt werden. Beispielsweise kann zuverlässig vorhergesagt werden, ob ein Fahrzeug bald abbremsen wird, um rechtzeitig an einem bekannten Haltepunkt bei einer Kreuzung zu stoppen, um dem eigenen Fahrzeug die Vorfahrt zu gewähren. Des Weiteren kann auf diese Weise besser vorhergesagt werden, ob bei einer aktuellen Verkehrssituation, bei der die Position und die Geschwindigkeit des Fahrzeugs, die Reaktionszeit der jeweiligen Fahrer und ein mögliches Bremsverhalten bekannt ist, das eigene Fahrzeug vermutlich von dem zweiten Verkehrsteilnehmer übersehen wurde, so dass dem eigenen Fahrzeug voraussichtlich von dem anderen Verkehrsteilnehmer die Vorfahrt genommen wird. In diesem Fall kann das erzeugte Steuersignal des eigenen Fahrzeugs dazu führen, dass dieses auf die Vorfahrt verzichtet oder eine Notbremsung einleitet.

Ferner kann vorteilhafterweise durch die Berücksichtigung der historischen Daten und der Analyse der aktuellen Verkehrssituation ein Steuersignal erzeugt werden, welches die Bewegung des Fahrzeugs nicht unnötig verändert und auch dem Fahrer des Fahrzeugs keine unnötigen Hinweise gibt, da aus den historischen Daten das voraussichtliche Verhalten anderer Verkehrsteilnehmer besser abgeschätzt werden kann.

Gemäß einer Ausgestaltung des erfindungsgemäßen Verfahrens werden zum Erzeugen der historischen Daten für einen geographischen Bereich zumindest innerhalb eines Zeitintervalls mehrfach Bewegungsdaten einer Vielzahl von Verkehrsteilnehmern erfasst. Auf Basis der erfassten Bewegungsdaten der Vielzahl von Verkehrsteilnehmern werden Verkehrssituationen in dem geographischen Bereich analysiert und den Verkehrssituationen zugeordnete Fahrmanöver ermittelt. Die ermittelten Fahrmanöver werden in Verbindung mit den ermittelten Verkehrssituationen als historische Daten gespeichert. Diese Verfahrensschritte werden somit vorab, d. h. vor den zuvor erläuterten Schritten des erfindungsgemäßen Verfahrens, durchgeführt. Vorteilhafterweise unterstützen die auf diese Weise erzeugten historischen Daten die zuverlässige Vorhersage voraussichtlicher Fahrmanöver eines anderen Verkehrsteilnehmers in einer aktuellen Verkehrssituation, die bei dem erfindungsgemäßen Verfahren ermittelt wurde. Die Ausgestaltung betrifft somit das Erzeugen der historischen Daten, die anschließend bei dem erfindungsgemäßen Verfahren abgerufen werden.

Beim Erzeugen der historischen Daten werden insbesondere vielfältige Bewegungsdaten von Fahrzeugen in einem Bereich erfasst, in welchem sich Fahrwege verschiedener Verkehrsteilnehmer kreuzen können, d. h. insbesondere im Bereich von Kreuzungen und Einmündungen einer Straße in eine andere Straße. Aufgrund von Verkehrsschildern oder allgemeinen Verkehrsregeln können für diese Verkehrssituationen Vorfahrtsregeln festgelegt sein. Daten zu diesen Vorfahrtsregeln können zwar auch in den historischen Daten enthalten sein. Auf Basis der Bewegungsdaten der erfassten Verkehrsteilnehmer können jedoch auch unabhängig von diesen allgemeinen Verkehrsregeln oder von Verkehrsschildern abhängigen Verkehrsregeln Vorfahrtssituationen für die Fahrzeuge ermittelt und in dem geographischen Bereich lokalisiert werden. Für diese Vorfahrtssituationen werden außerdem eine Vielzahl von Fahrmanövern der erfassten Verkehrsteilnehmer, insbesondere erfasster Fahrzeuge, gespeichert. Aus einer statistischen Analyse der Fahrmanöver kann ermittelt werden, welches Fahrmanöver ein Fahrzeug in einer bestimmten Verkehrssituation am wahrscheinlichsten ausführt. Beispielsweise kann ermittelt werden, wann ein Fahrzeug auf einer Straße, die keine Vorfahrt vor einer anderen Straße genießt, vor der Einmündung in die andere Straße beginnt zu bremsen und wie der Bremsverlauf ist. Die historischen Daten repräsentieren somit ein Wissen, wie sich Fahrzeuge in einer bestimmten Verkehrssituation, zum Beispiel an einer Kreuzung, am wahrscheinlichsten bewegen.

Wenn sich aus den Bewegungsdaten eines aktuell erfassten Fahrzeugs des zweiten Verkehrsteilnehmers sowie einer geographischen Karte für das Umfeld des Fahrzeugs ergibt, dass das eigene Fahrzeug in eine Verkehrssituation gelangt, bei welcher eine Vorfahrtsregel anzuwenden ist, kann vorteilhafterweise bei dem erfindungsgemäßen Verfahren die Anwendung der Vorfahrtsregel mittels der historischen Daten und der Bewegungsdaten anderer Verkehrsteilnehmer abgeschätzt und bewertet werden. Die Bewertung der Verkehrssituation führt dann zur Vorhersage des Verhaltens eines anderen Verkehrsteilnehmers, insbesondere des zweiten Verkehrsteilnehmers.

Die historischen Daten werden kontinuierlich aktualisiert. Wenn das eigene Fahrzeug dann in ein bestimmtes Umfeld eintritt, liegen somit aktuelle, d. h. erst vor kurzem erfasste, historische Daten zu Fahrmanövern vor, welche Fahrzeuge in der Vergangenheit ausgeführt haben. Diese Daten werden vorteilhafterweise dafür verwendet, das Fahrmanöver des zweiten Verkehrsteilnehmers vorherzusagen, welcher sich in einer Verkehrssituation befindet, welche auch beim Erfassen der historischen Daten vorlag.

Gemäß einer Ausgestaltung des erfindungsgemäßen Verfahrens werden die historischen Daten in einer geographischen Karte gespeichert, welche die Fahrwege sowie die für die Fahrwege geltenden Verkehrsregeln und die in der Vergangenheit auf den Fahrwegen von Verkehrsteilnehmern ausgeführten Fahrmanöver umfasst. Für die bei dem erfindungsgemäßen Verfahren bestimmte Verkehrssituation wird diese geographische Karte mit den historischen Daten dann abgerufen. Vorteilhafterweise umfassen die historischen Daten somit insbesondere eine geographische Karte mit einem Netz aus Fahrwegen, die für die Fahrwege geltenden Verkehrsregeln und Fahrmanöver, die auf den Fahrwegen ausgeführt wurden.

Die geographische Karte, in welcher die historischen Daten gespeichert sind, kann auch für die Umfelderfassung des Fahrzeugs bereits abgerufen werden. Die Fahrwege können dann aus der abgerufenen geographischen Karte extrahiert werden. Hierfür ist es nur erforderlich, dass die Position des Fahrzeugs bekannt ist.

Den Verkehrssituationen sind jeweils Verkehrsregeln zugeordnet. Bevorzugt werden in dem erfassten Umfeld des Fahrzeugs die für die Fahrwege geltenden Verkehrsregeln erfasst. Eine Verkehrssituation kann somit insbesondere den Verlauf der Fahrwege, die zugeordnete Verkehrsregel und die Bewegungsdaten des Fahrzeugs und der anderen Verkehrsteilnehmer umfassen. Vorteilhafterweise unterstützt das Verfahren hierdurch den Fahrer des Fahrzeugs insbesondere in Verkehrssituationen, bei denen das Risiko einer Kollision mit einem anderen Verkehrsteilnehmer besteht.

Gemäß des erfindungsgemäßen Verfahrens wird die der Verkehrssituation zugeordnete Verkehrsregel mittels der historischen Daten aus vergangenen Fahrmanövern von Verkehrsteilnehmern gewonnen. Es ist insbesondere möglich eine Verkehrsregel beim Generieren der historischen Daten zu gewinnen. Die Verkehrsregel kann nämlich einerseits aus Verkehrsschildern und allgemeinen Regeln für Fahrwege abgeleitet werden. Zusätzlich ist es jedoch möglich, nur aus den erfassten Fahrmanövern Verkehrsregeln abzuleiten. Dies ist beispielsweise dann vorteilhafterweise, wenn es für ein regelgerechtes Verhalten kein Verkehrsschild oder keine allgemeine Regel gibt, eine bestimmte Regel jedoch von im Wesentlichen allen Fahrzeugen befolgt wird. Beispielsweise kann ein Fahrer erkennen, dass er sich auf einer Vorfahrtsstraße befindet, selbst wenn es für eine Einmündung einer sehr kleinen Straße kein Verkehrsschild gibt, welches die Rechts-Vor-Links-Regel aufhebt. Wenn jedoch beim Generieren der historischen Daten erfasst wurde, dass im Wesentlichen alle Fahrzeuge, welche von der kleinen Straße in die andere Straße einfahren wollen, anhalten und warten, kann davon ausgegangen werden, dass es sich bei der anderen Straße um eine Vorfahrtsstraße handelt. Diese Verkehrsregel kann dann in den historischen Daten gespeichert werden.

Bei den Verkehrsregeln, die den Verkehrssituationen zugeordnet sind, ist zumindest eine der Verkehrsregeln eine Vorfahrtsregel. Vorfahrtsregeln dienen dazu, Kollisionen zwischen Verkehrsteilnehmern zu vermeiden. Die Unterstützung des Fahrers in einer Verkehrssituation mit einer Vorfahrtsregel dient daher der Vermeidung von Kollisionen mit anderen Verkehrsteilnehmern.

Gemäß einer vorteilhaften Weiterbildung des erfindungsgemäßen Verfahrens werden bei der Vorhersage des Fahrmanövers des zweiten Verkehrsteilnehmers die Bewegungsdaten des zweiten Verkehrsteilnehmers mit Bewegungsdaten eines vergangenen Fahrmanövers eines Verkehrsteilnehmers verglichen, welcher in derselben Verkehrssituation war. Alternativ oder zusätzlich kann das vergangene Fahrmanöver auch durch eine statistische Analyse einer Vielzahl von vergangenen Fahrmanövern erzeugt worden sein. Vorteilhafterweise kann hierdurch eine sehr zuverlässige Vorhersage des voraussichtlichen Fahrmanövers des zweiten Verkehrsteilnehmers erzeugt werden.

Gemäß einer Weiterbildung des erfindungsgemäßen Verfahrens wird bei der Vorhersage des Fahrmanövers des zweiten Verkehrsteilnehmers in Abhängigkeit von den Bewegungsdaten des zweiten Verkehrsteilnehmers und der erfassten Verkehrssituation geprüft, ob der zweite Verkehrsteilnehmer voraussichtlich die bestimmte Verkehrsregel befolgen wird. Normalerweise wird in einer aktuellen Verkehrssituation jeder Verkehrsteilnehmer die Verkehrsregeln befolgen. Selbst wenn sich zum Beispiel zwei Fahrzeuge auf verschiedenen Fahrwegen so aneinander annähern, dass es bei einer Fortentwicklung der Bewegungsdaten zu einer Kollision kommen würde, ist es normalerweise nicht erforderlich, den Fahrer des Fahrzeugs zu warnen oder in den Bewegungsverlauf einzugreifen, wenn die Prüfung ergibt, dass der zweite Verkehrsteilnehmer voraussichtlich die Verkehrsregel für die Verkehrssituation befolgen wird. Wenn es jedoch durch einen Vergleich mit den historischen Daten zu einer Abweichung des aktuellen Fahrmanövers des zweiten Verkehrsteilnehmers von Fahrmanövern kommt, welche für die historischen Daten gewonnen wurden, kann die Prüfung ergeben, dass der zweite Verkehrsteilnehmer voraussichtlich die Verkehrsregel nicht befolgen wird. In diesem Fall kann ein Steuersignal erzeugt werden, welches den Fahrer des Fahrzeugs für diese Verkehrssituation unterstützt. Dieses Steuersignal kann auch einen direkten Eingriff in die Bewegung des Fahrzeugs umfassen. Zum Beispiel kann eine Notbremsung eingeleitet werden.

Gemäß einer weiteren Ausgestaltung des erfindungsgemäßen Verfahrens wird für die Verkehrssituation in Abhängigkeit von dem vorhergesagten Fahrmanöver des zweiten Verkehrsteilnehmers und/oder in Abhängigkeit von der bestimmten Verkehrssituation ein Zeitpunkt bestimmt, bei welchem das Steuersignal erzeugt wird. Beispielsweise hängt dieser Zeitpunkt davon ab, ob der zweite Verkehrsteilnehmer ein Fahrmanöver ausführt, welches von einem zugeordneten Fahrmanöver der historischen Daten abweicht. Gleichermaßen kann eine Position bestimmt werden, bei welcher das Steuersignal erzeugt wird.

Wenn sich das eigene Fahrzeug beispielsweise einer Kreuzung mit einer Vorfahrtsregel nähert, wird bestimmt, ob ein anderes Fahrzeug die Vorfahrt hat oder nicht. Gilt beispielsweise die Vorfahrtsregel rechts vor links, wird bestimmt, ob das eigene Fahrzeug in Bezug auf das andere Fahrzeug von rechts oder von links kommt. Beim Erzeugen des Steuersignals ist es ferner wichtig, dass dieses die Bewegung des Fahrzeugs nicht unnötig beeinträchtigt. Es soll vermieden werden, dass bei einem normalen Bewegungsablauf der Verkehrsteilnehmer in einer Verkehrssituation ein Steuersignal erzeugt wird, welches den Bewegungsverlauf des Fahrzeugs direkt oder indirekt ändert. Betrachtet man beispielsweise eine Kreuzung, bei welcher das Fahrzeug einem von rechts kommenden Fahrzeug die Vorfahrt gewähren muss, es hingegen vor einem von links kommenden Fahrzeug Vorfahrt hat, so kann bei dem erfindungsgemäßen Verfahren das Steuersignal zu verschiedenen Zeitpunkten bzw. bei unterschiedlichen Positionen des Fahrzeugs erzeugt werden, je nachdem, ob sich der zweite Verkehrsteilnehmer von rechts oder von links der Kreuzung nähert. Werden bei der Umfelderfassung Bewegungsdaten eines zweiten Fahrzeugs erfasst, welches sich von links nähert, wird davon ausgegangen, dass der Fahrer dieses Fahrzeugs dem eigenen Fahrzeug die Vorfahrt gewährt. Selbst wenn eine Extrapolation der Bewegungsdaten der Fahrzeuge die Gefahr einer Kollision ergibt, ist es nicht erforderlich ein die Kollision verhinderndes Steuersignal zu erzeugen, so lange die Bewegungsdaten des zweiten Fahrzeugs einem in den historischen Daten gespeicherten Fahrmanöver für diese Kreuzung innerhalb eines gewissen Toleranzbereichs entsprechen. Erst wenn eine Abweichung von dem Fahrmanöver der historischen Daten festgestellt wird, muss das Steuersignal erzeugt werden, um den Fahrer des Fahrzeugs rechtzeitig unterstützen zu können. Das Steuersignal wird jedoch nicht zu früh und ohne dass dies notwendig wäre, erzeugt. Wenn andererseits bei der Umfelderfassung ein von rechts kommendes Fahrzeug, welchem das eigene Fahrzeug Vorfahrt gewähren muss, erfasst wird, wird das Steuersignal bereits zu einem früheren Zeitpunkt als bei einem von links kommenden Fahrzeug erzeugt. Hierdurch wird vorteilhafterweise sichergestellt, dass das eigene Fahrzeug rechtzeitig abbremsen kann, um dem von rechts kommenden Fahrzeug die Vorfahrt zu gewähren.

Gemäß einer Ausgestaltung des erfindungsgemäßen Verfahrens werden beim Erfassen des Umfelds des Fahrzeugs Umfeldmerkmale aus geostatischen Daten extrahiert. Die geostatischen Daten sind Objekten zugeordnet, welche sich nicht bewegen. Anhand dieser geostatischen Daten kann beispielsweise die Positionsbestimmung des Fahrzeugs mittels Satellitennavigation verbessert werden.

Ferner kann beim Erfassen des Umfelds des Fahrzeugs ein Fahrverhalten des Fahrzeugs und/oder anderer Verkehrsteilnehmer analysiert werden. Es werden dann beispielsweise Umfeldmerkmale aus Daten zum analysierten Fahrverhalten des Fahrzeugs und aus Daten zum analysierten Fahrverhalten anderer Verkehrsteilnehmer extrahiert. Das Fahrverhalten umfasst dabei insbesondere den Ort und die Bewegung des eigenen Fahrzeugs und des Fahrzeugs eines anderen Verkehrsteilnehmers.

Gemäß einer Weiterbildung des erfindungsgemäßen Verfahrens werden für die Analyse des Fahrverhaltens anderer Verkehrsteilnehmer Daten von dem anderen Verkehrsteilnehmer an das Fahrzeug übertragen. Die Daten können insbesondere über eine direkte Kommunikationsverbindung von dem anderen Verkehrsteilnehmer an das Fahrzeug übertragen werden (Fahrzeug-zu-Fahrzeug-Kommunikation). Beispielsweise können die Daten mittels einer direkten Mobilfunkkommunikation von dem anderen Verkehrsteilnehmer an das Fahrzeug übertragen werden. Ferner können so genannte Kantenknoten (Edge Nodes) eines Mobilfunknetzes für die Datenübertragung bereitgestellt werden.

Vorteilhafterweise ist es hierdurch möglich, insbesondere die Bewegungsdaten anderer Verkehrsteilnehmer schneller und genauer zu erfassen.

Ist beispielsweise der zweite Verkehrsteilnehmer ein zweites Fahrzeug, werden bei einer Ausgestaltung des erfindungsgemäßen Verfahrens Daten zu einer Betätigung einer Einrichtung des zweiten Fahrzeugs an das Fahrzeug übertragen. Bei der Vorhersage des Fahrmanövers des zweiten Fahrzeugs werden dann die übertragenen Daten zur Betätigung der Einrichtung des zweiten Fahrzeugs berücksichtigt. Die an das Fahrzeug übertragenen Daten umfassen insbesondere Betätigungen von Einrichtungen des zweiten Fahrzeugs, welche Einfluss auf die Bewegung des Fahrzeugs haben. Diese Einrichtungen sind zum Beispiel das Gaspedal, das Bremspedal, das Lenkrad und/oder der Schalter zum Betätigen des Fahrtrichtungsanzeigers. Auf diese Weise ist es möglich, die Bewegung des zweiten Fahrzeugs bereits zu einem Zeitpunkt berechnet zu haben, zu dem die Sensoren des Fahrzeugs noch keine Bewegungsveränderung des zweiten Fahrzeugs detektieren konnten. Beispielsweise kann aus der Betätigung des Bremspedals des zweiten Fahrzeugs in dem eigenen Fahrzeug bereits eine zukünftige Geschwindigkeitsreduzierung des zweiten Fahrzeugs erfasst bzw. vorhergesagt werden, wenn die Reduktion der Geschwindigkeit noch nicht eingetreten ist oder noch nicht detektiert werden konnte.

Gemäß einer Ausgestaltung des erfindungsgemäßen Verfahrens wird mittels des erzeugten Steuersignals die Bewegung des Fahrzeugs automatisiert gesteuert. Der automatisierte Eingriff in die Bewegung des Fahrzeugs kann im Rahmen einer vollautomatisierten Fahrt des Fahrzeugs oder im Rahmen einer teilautomatisierten Fahrt des Fahrzeugs erfolgen, bei welcher beispielsweise durch das Steuersignal eine Notbremsung ausgeführt wird, wenn sich aus dem vorhergesagten Fahrmanöver des zweiten Verkehrsteilnehmers ergibt, dass dieser Verkehrsteilnehmer voraussichtlich eine für die erfasste Verkehrssituation bestimmte Verkehrsregel nicht beachtet. Alternativ oder zusätzlich kann mittels des erzeugten Steuersignals dem Fahrer des Fahrzeugs ein Hinweis ausgegeben werden. Dieser Hinweis kann eine visuelle oder akustische Informationsmeldung oder Warnmeldung sein.

Die der Erfindung zugrunde liegende Aufgabe wird zudem durch ein Fahrerassistenzsystem nach Anspruch 13 gelöst.

Die Umfelderfassungseinrichtung umfasst insbesondere eine Vielzahl von Sensoren, die in dem Fahrzeug untergebracht ist. Des Weiteren kann alternativ oder zusätzlich die Umfelderfassungseinrichtung auch auf fahrzeugexterne Sensoren über die Schnittstelle zugreifen. Gleichermaßen kann die Umfelderfassungseinrichtung gegebenenfalls über die Schnittstelle auf eine geographische Karte mit Fahrwegen zugreifen.

Der Speicher, in welchem die historischen Daten gespeichert sind, ist insbesondere außerhalb des Fahrzeugs angeordnet. Es handelt sich beispielsweise um einen zentralen Server, welcher einer Vielzahl von Fahrzeugen historische Daten zu bestimmten geographischen Bereichen zur Verfügung stellen kann, in denen sich die jeweiligen Fahrzeuge befinden. Entsprechend handelt es sich bei der Schnittstelle insbesondere um eine drahtlose Kommunikationsschnittstelle, insbesondere eine Schnittstelle für Mobilfunkkommunikation.

Die Erfindung wird nun anhand eines Ausführungsbeispiels mit Bezug zu den Zeichnungen erläutert.
- Figur 1: zeigt schematisch einen geographischen Bereich, in welchem das Ausführungsbeispiel des erfindungsgemäßen Verfahrens ausgeführt wird und
- Figur 2: zeigt den Aufbau des Ausführungsbeispiels des erfindungsgemäßen Fahrerassistenzsystems.

Initiale Voraussetzung für das Ausführen des Verfahrens ist, dass historische Daten erzeugt worden sind, welche bei der Ausführung des Verfahren in einer aktuellen Verkehrssituation verwendet werden.

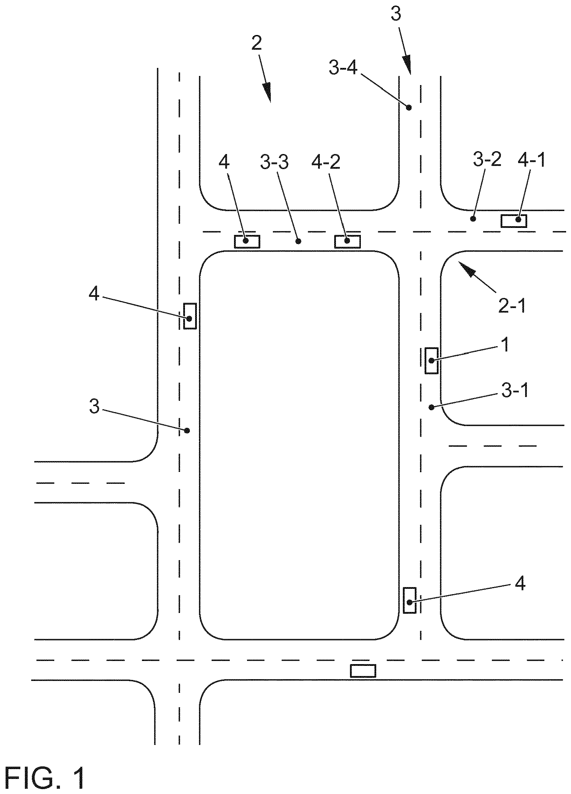

Im Folgenden wird daher zunächst beschrieben, wie die historischen Daten initial generiert werden; es wird dabei auf Fig. 1 Bezug genommen:
In einem bestimmten geographischen Bereich gibt es ein Straßennetz 2 mit Fahrwegen 3, welche mehrere Fahrspuren umfassen können, auf denen sich Fahrzeuge bewegen können, welche in Figur 1 mit den Bezugszeichen 4 bzw. 4-1 und 4-2 bezeichnet sind. Für das Straßennetz 2 ist in einem zentralen Speicher eine digitale geographische Karte gespeichert. Die digitale Karte umfasst Informationen zu dem geographischen Verlauf des Straßennetzes 2 sowie Zusatzinformationen zu diesem Straßennetz 2. Zu den Zusatzinformationen gehören Verkehrsregeln, welche für das Straßennetz 2 gelten. Hierfür sind Informationen über Verkehrszeichen gespeichert, welche sich bei den Straßen befinden, welche das gespeicherte Straßennetz 2 repräsentieren. Zu den Verkehrsregeln gehört insbesondere die Information, welches Fahrzeug Vorfahrt hat, wenn sich zwei Fahrwege kreuzen, wie bei einer Straßenkreuzung oder einer Einmündung einer Straße in eine andere Straße.

Des Weiteren senden Fahrzeuge 4 fortwährend Bewegungsdaten an einen zentralen Speicher, wenn sie sich in dem betreffenden geographischen Bereich befinden. Die Bewegungsdaten umfassen unter anderem eine anonymisierte Identifikation des sendenden Fahrzeugs 4, die aktuelle Position des Fahrzeugs 4 und einen Zeitstempel. Ergänzend kann noch die aktuelle Geschwindigkeit des Fahrzeugs 4 und Daten von Sensoren des Fahrzeugs 4, welche die Umwelt und das Umfeld erfassen, an den zentralen Speicher gesendet werden.

Die Daten des zentralen Speichers werden so analysiert, dass von einer Vielzahl von Fahrzeugen 4 Verkehrssituationen in dem geographischen Bereich analysiert werden. Außerdem werden den Verkehrssituationen zugeordnete Fahrmanöver ermittelt. Diese Daten werden in dem zentralen Speicher als historische Daten gespeichert.

Für die Kreuzung 2-1 ist beispielsweise die Vorfahrtsregel hinterlegt, dass ein von rechts kommendes Fahrzeug Vorfahrt vor einem von links kommenden Fahrzeug hat. Es werden nun fortwährend die Bewegungsdaten von Fahrzeugen 4 erfasst, welche sich auf den Fahrwegen 3-1, 3-2, 3-3 und 3-4 der Kreuzung 2-1 nähern. Wenn sich beispielsweise ein Fahrzeug 4 auf dem Fahrweg 3-1 der Kreuzung 2-1 nähert, ohne dass sich ein weiteres Fahrzeug 4 auf den Fahrwegen 3-1 oder 3-3 der Kreuzung 2-1 nähert, wird dieses Fahrzeug 4 üblicherweise in einem bestimmten Abstand vor der Kreuzung 2-1 abbremsen, mit langsamerer Geschwindigkeit die Kreuzung 2-1 überqueren und anschließend wieder beschleunigen. Wenn sich hingegen auf dem Fahrweg 3-2 ein weiteres Fahrzeug 4 der Kreuzung 2-1 nähert, wird das Fahrzeug 4 auf dem Fahrweg 3-1 erneut in einem bestimmten Abstand vor der Kreuzung 2-1 abbremsen, dann jedoch vor der Kreuzung 2-1 anhalten, so dass das Fahrzeug 4 auf dem Fahrweg 3-2 die Kreuzung 2-1 passieren kann. Erst dann wird das Fahrzeug 4 auf dem Fahrweg 3-1 die Kreuzung 2-1 passieren. Wenn andererseits sich nur ein Fahrzeug auf dem Fahrweg 3-3 der Kreuzung 2-1 nähert, wird das Fahrzeug 4 auf dem Fahrweg 3-1 in einem bestimmten Abstand vor der Kreuzung 2-1 seine Geschwindigkeit verlangsamen, dann jedoch trotz des sich auf dem Fahrweg 3-3 nähernden Fahrzeugs 4 die Kreuzung 2-1 mit geringerer Geschwindigkeit passieren und anschließend wieder beschleunigen. Diese Bewegungsdaten der Fahrzeuge 4 auf den Fahrwegen 3-1 bis 3-4 werden in eine zeitliche Beziehung und in eine Beziehung zu der bei der Kreuzung 2-1 geltenden Verkehrsregel gesetzt. Aus den Daten wird die Verkehrsregel verifiziert und es werden für die verschiedenen zuvor erläuterten Verkehrssituationen die Fahrmanöver einzelner Fahrzeuge 4 auf den Fahrwegen 3-1 bis 3-3 bei einer Annäherung an die Kreuzung 2-1 gespeichert. Für die Vielzahl der nach und nach ermittelten Fahrmanöver für die verschiedenen Verkehrssituationen wird eine statistische Analyse durchgeführt, durch welche ein typisches Fahrmanöver für eine bestimmte Verkehrssituation ermittelt wird. Für dieses typische Fahrmanöver können außerdem Toleranzwerte für die Bewegungsdaten gespeichert werden.

Wenn sich ergibt, dass für eine Verkehrssituation keine Vorfahrtsregel aus den Verkehrsregeln abgeleitet werden kann, wird die Vorfahrtsregel aus den erfassten Fahrmanövern einer Vielzahl von Fahrzeugen gewonnen und zugehörig zu zum Beispiel einer Kreuzung des Straßennetzes 2 gespeichert.

Diese historischen Daten werden kontinuierliche aktualisiert und in dem zentralen Speicher gespeichert.

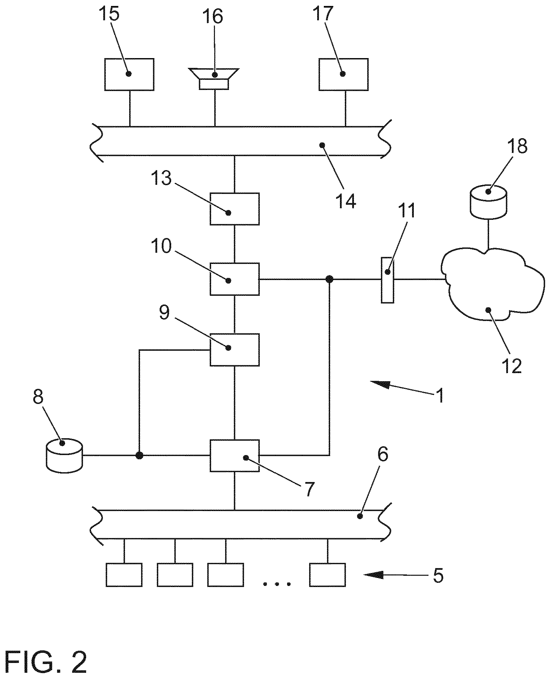

Mit Bezug zu den Figuren 1 und 2 wird nun ein Ausführungsbeispiel des erfindungsgemäßen Fahrerassistenzsystems und ein Ausführungsbeispiel des erfindungsgemäßen Verfahrens erläutert:
Ausgangspunkt des Verfahrens ist, dass die vorstehend erläuterten historischen Daten in dem fahrzeugexternen zentralen Speicher 18 gespeichert sind. Betrachtet wird nun ein Fahrzeug 1, welches sich auf dem Fahrweg 3-1 der Kreuzung 2-1 nähert. Das Fahrzeug 1 umfasst eine Vielzahl von Sensoren 5, mit welchen das Umfeld des Fahrzeugs 1 erfasst wird. Die Sensoren 5 umfassen insbesondere mehrere Umfeldkameras, Radarsensoren und LIDAR-Sensoren. Ferner umfassen die Sensoren 5 einen Positionsbestimmungssensor, mit welchem über ein Satellitennavigationssystem die aktuelle Position des Fahrzeugs 1 bestimmt werden kann. Neben der eigenen Position des Fahrzeugs 1 wird bei der Umfelderfassung der Verlauf der Fahrwege 3-1 bis 3-4 sowie Bewegungsdaten anderer Verkehrsteilnehmer 4 erfasst. Zu diesen anderen Verkehrsteilnehmern 4 gehört ein Fahrzeug 4-1, welches sich auf dem Fahrweg 3-2 der Kreuzung 2-1 nähert und ein Fahrzeug 4-2, welches sich auf dem Fahrweg 3-3 der Kreuzung 2-1 nähert.

Die Sensoren 5 sind mit einem Datenbus 6 des Fahrzeugs 1 gekoppelt, über welchen sie die gewonnenen Daten an eine Umfelderfassungseinrichtung 7 übertragen. Sie extrahiert Merkmale aus geostatischen Daten, wodurch insbesondere die Verkehrsinfrastruktur erfasst wird, Merkmale des Fahrverhaltens des eigenen Fahrzeugs 1 und Merkmale des Fahrverhaltens der Fahrzeuge 4-1 und 4-2 im Umfeld des Fahrzeugs 1. Zu der aktuellen Position des Fahrzeugs 1 ruft die Umfelderfassungseinrichtung 7 über eine Schnittstelle 11 des Fahrzeugs 1 eine geographische Karte über das Internet 12 von dem fahrzeugexternen Speicher 18 ab, sofern diese geographische Karte nicht in dem fahrzeuginternen Speicher 8 des Fahrzeugs 1 gespeichert ist.

Die Umfelderfassungseinrichtung 7 überträgt die Daten zum erfassten Umfeld des Fahrzeugs 1 an eine Analyseeinheit 9. Die Analyseeinheit 9 analysiert die Daten zum erfassten Umfeld des Fahrzeugs 1 und bestimmt eine Verkehrssituation des Fahrzeugs 1 und eine Verkehrsregel für die Verkehrssituation des Fahrzeugs 1 in Beziehung zu einem oder mehreren Fahrzeugen 4-1, 4-2 der anderen Fahrzeuge 4. Im Hinblick auf die Verkehrsregel für die Verkehrssituation kann auch die Analyseeinheit 9 auf die von dem fahrzeugexternen zentralen Speicher 18 übertragene geographische Karte oder die in dem fahrzeuginternen Speicher 8 gespeicherte geographische Karte zugreifen.

Die von der Analyseeinheit 9 erzeugten Daten werden an eine Prädiktionseinheit 10 des Fahrzeugs 1 übertragen. In der Prädiktionseinheit 10 liegen somit Daten zum Umfeld des Fahrzeugs 1 und zur aktuellen Verkehrssituation, in welcher sich das Fahrzeug 1 befindet, sowie die Bewegungsdaten anderer Fahrzeuge 4-1 und 4-2 vor, welche an der Verkehrssituation beteiligt sind. Für diese Verkehrssituation ruft die Prädiktionseinheit 10 historische Daten zu dem erfassten Umfeld ab. Die Prädiktionseinheit 10 vergleicht nun die aktuell erfasste Verkehrssituation mit den Verkehrssituationen für die Kreuzung 2-1, welche aus den Bewegungsdaten vergangener Fahrmanöver von Fahrzeugen gewonnen wurden. In dem in Figur 1 gezeigten Fall werden somit in den historischen Daten Verkehrssituationen ermittelt, bei denen sich ein Fahrzeug auf dem Fahrweg 3-1 der Kreuzung 2-1 nähert und gleichzeitig sich weitere Fahrzeuge auf den Fahrwegen 3-2 und 3-3 der Kreuzung 2-1 nähern. Des Weiteren werden aus den historischen Daten für diese Verkehrssituation die Fahrmanöver extrahiert, welche die beteiligten Fahrzeuge ausgeführt haben.

In dem in Figur 1 gezeigten Fall ergeben sich somit die Bewegungsdaten für das zweite Fahrzeug 4-1 und das dritte Fahrzeug 4-2, welche sich der Kreuzung 2-1 nähern in Relation zu den Bewegungsdaten des Fahrzeugs 1, welches sich auf dem Fahrweg 3-1 der Kreuzung 2-1 nähert. Dabei wird auch geprüft, ob das zweite 4-1 oder dritte Fahrzeug 4-2 die der Verkehrssituation für die Kreuzung 2-1 zugeordnete Verkehrsregel voraussichtlich befolgen wird oder nicht. Von der Analyseeinheit 9 wird dann ein voraussichtliches Fahrmanöver des zweiten 4-1 und dritten Fahrzeugs 4-2 mittels der abgerufenen historischen Daten und der aktuellen Verkehrssituation vorhergesagt. Wenn sich dabei die Bewegungsdaten der Fahrzeuge 4-1 und 4-2 mit den Bewegungsdaten von Fahrmanövern der historischen Daten für diese Verkehrssituation decken, wobei gegebenenfalls ein gewisser Toleranzbereich berücksichtigt wird, wird als voraussichtliches Fahrmanöver für die Fahrzeuge 4-1 und 4-2 vorhergesagt, dass diese sich bewegen, wie es sich aus den historischen Daten für vergangene Fahrmanöver von Fahrzeugen in entsprechenden Verkehrssituationen ergeben hat.

Bei dem in Figur 1 gezeigten Beispiel gilt für die Kreuzung 2-1 als Vorfahrtsregel, dass ein von rechts kommendes Fahrzeug Vorfahrt hat. Für das zweite Fahrzeug 4-1 wird sich als voraussichtliches Fahrmanöver somit ergeben, dass dieses in einem bestimmten Abstand von der Kreuzung 2-1 die Geschwindigkeit verlangsamt, dann jedoch mit geringerer Geschwindigkeit ohne anzuhalten die Kreuzung 2-1 passiert, indem es z. B. geradeaus weiterfährt oder rechts abbiegt. Für das dritte Fahrzeug 4-2 ergibt sich als voraussichtliches Fahrmanöver, dass dieses Fahrzeug in einem bestimmten Abstand von der Kreuzung 2-1 die Geschwindigkeit verlangsamt und vor der Kreuzung 2-1 anhält, um dem sich auch der Kreuzung 2-1 nähernden Fahrzeug 1 die Vorfahrt zu gewähren. Diese Daten werden von der Prädiktionseinheit 10 an die Steuereinheit 13 übertragen.

In Abhängigkeit von dem vorhergesagten Fahrmanöver des zweiten Fahrzeugs 4-1 und des dritten Fahrzeugs 4-2 erzeugt die Steuereinheit 13 für die ermittelte Verkehrssituation ein Steuersignal zum Unterstützen des Fahrers beim Führen des Fahrzeugs 1. Wenn der Fahrer des Fahrzeugs 1 für die Fahraufgabe zuständig ist, wird dieses Steuersignal über den weiteren Datenbus 14 an eine Anzeigeeinrichtung 15 und/oder an einen Lautsprecher 16 übertragen. Auf diese Weise kann dem Fahrer des Fahrzeugs 1 ein Hinweis, zum Beispiel eine Informationsmeldung oder eine Warnmeldung, ausgegeben werden.

Außerdem wird von der Steuereinheit 13 für die Verkehrssituation in Abhängigkeit von dem vorhergesagten Fahrmanöver des zweiten Fahrzeugs 4-1 bzw. des dritten Fahrzeugs 4-2 ein Zeitpunkt und eine Position bestimmt, bei welcher das Steuersignal erzeugt und in direktem Anschluss an den weiteren Datenbus 14 übertragen wird. Dieser Zeitpunkt bzw. diese Position wird dabei so gewählt, dass in jedem Fall eine Kollision mit einem anderen Fahrzeug 4 entweder durch einen automatisierten Eingriff in die Bewegung des Fahrzeugs 1 oder durch die Ausgabe einer Warnmeldung verhindert werden kann. Zum anderen wird vermieden, dass unnötige Hinweise dem Fahrer des Fahrzeugs 1 ausgegeben werden, welche ihn gegebenenfalls ablenken würden.

Beispielsweise kann über die Anzeigeeinrichtung 15 der Hinweis ausgegeben werden, dass sich der Kreuzung 2-1 von rechts an zweites Fahrzeug 4-1 nähert, welches Vorfahrt hat. Falls für das dritte Fahrzeug 4-2 als voraussichtliches Fahrmanöver ermittelt worden ist, dass der Bewegungsverlauf dieses dritten Fahrzeugs 4-2 so von den gespeicherten Fahrmanövern der historischen Daten abweicht, dass das dritte Fahrzeug 4-2 voraussichtlich nicht an der Kreuzung 2-1 anhalten wird, sondern dem Fahrzeug 1 voraussichtlich keine Vorfahrt gewähren wird und ohne anzuhalten die Kreuzung 2-1 passieren wird, kann mittels des von der Steuereinheit 13 erzeugten Steuersignals sowohl über die Anzeigeeinrichtung 15 als auch über den Lautsprecher 16 eine visuelle und akustische Warnung ausgegeben werden.

Umfasst das Fahrzeug 1 eine Automatisierungseinrichtung 17, welche beispielsweise eine automatische Notbremsung ausführen kann oder welche das Fahrzeug 1 vollautomatisch steuert, wird das Steuersignal zusätzlich diese Automatisierungseinrichtung 17 über den weiteren Datenbus 14 übertragen, so dass dieses das Fahrzeug 1 entsprechend dem Steuersignal steuert. Die Automatisierungseinrichtung 17 kann beispielsweise eine Notbremsung einleiten, wenn ermittelt worden ist, dass das dritte Fahrzeug 4-2 keine Vorfahrt gewähren wird. Außerdem kann die Bewegung des Fahrzeugs 1 so gesteuert werden, dass das Fahrzeug 1 dem zweiten Fahrzeug 4-1 Vorfahrt gewährt, indem es vor der Kreuzung 2-1 anhält, bis das zweite Fahrzeug 4-1 die Kreuzung 2-1 passiert hat.

Bei einem weiteren Ausführungsbeispiel werden nicht nur die im fahrzeugexternen Speicher 18 gespeicherten historischen Daten an die Prädiktionseinheit 10 übertragen. Es werden auch zwischen den einzelnen Fahrzeugen 1 und 4 Daten ausgetauscht. Für die Analyse des Fahrverhaltens des zweiten 4-1 und dritten Fahrzeugs 4-2 werden dem Fahrzeug 1 Daten zu einer Betätigung von Einrichtungen des Fahrzeugs 4-1 bzw. 4-2 übertragen, welche Einfluss auf die Bewegung des Fahrzeugs haben. Wenn in einem der Fahrzeuge 4-1 oder 4-2 das Gaspedal oder das Bremspedal in einer bestimmten Weise betätigt wird, wird dies an das Fahrzeug 1 übertragen. Gleichermaßen kann die Betätigung des Lenkrads und/oder die Betätigung des Schalters des Fahrtrichtungsanzeigers in dem zweiten 4-1 und dritten Fahrzeug 4-2 erfasst und an das Fahrzeug 1 übertragen werden. Beispielsweise können die Daten über eine direkte Kommunikationsverbindung über das Internet 12 oder ein Mobilfunknetz direkt zwischen den Fahrzeugen 1 und 4 ausgetauscht werden. Dabei können beispielsweise so genannten Kantenknoten (Edge Nodes) eines Mobilfunknetzes genutzt werden.

Auf diese Weise kann die Prädiktionseinheit 10 noch besser das voraussichtliche Fahrmanöver des zweiten Fahrzeugs 4-1 bzw. des dritten Fahrzeugs 4-2 vorhersagen.

### Bezugszeichenliste

- 1: Fahrzeug
- 2: Straßennetz
- 2-1: Kreuzung
- 3: Fahrwege
- 3-1: Fahrweg
- 3-2: Fahrweg
- 3-3: Fahrweg
- 3-4: drittes Fahrzeug
- 4: Fahrzeuge anderer Verkehrsteilnehmer
- 4-1: zweites Fahrzeug
- 4-2: drittes Fahrzeug
- 5: Sensoren
- 6: Datenbus
- 7: Umfelderfassungseinrichtung
- 8: fahrzeuginterner Speicher
- 9: Analyseeinheit
- 10: Prädiktionseinheit
- 11: Schnittstelle
- 12: Internet
- 13: Steuereinheit
- 14: weiterer Datenbus
- 15: Anzeigeeinrichtung
- 16: Lautsprecher
- 17: Automatisierungseinrichtung
- 18: fahrzeugexterner Speicher

## Patentansprüche

1. Computerimplementiertes Verfahren zum Unterstützen eines Fahrers eines Fahrzeugs (1) beim Führen des Fahrzeugs (1), bei dem
das Umfeld des Fahrzeugs (1) erfasst wird, wobei die Umfelderfassung den Verlauf von Fahrwegen (3) sowie Bewegungsdaten anderer Verkehrsteilnehmer (4) umfasst, wobei
für das erfasste Umfeld historische Daten abgerufen werden, die zumindest aus vergangenen Fahrmanövern von Verkehrsteilnehmern in diesem Umfeld gewonnen wurden,
das erfasste Umfeld des Fahrzeugs (1) analysiert wird und eine Verkehrssituation des Fahrzeugs (1) in Beziehung zu zumindest einem zweiten Verkehrsteilnehmer (4-1) der erfassten anderen Verkehrsteilnehmer (4) bestimmt wird, wobei der Verkehrssituation eine Verkehrsregel zugeordnet ist,
ein voraussichtliches Fahrmanöver des zweiten Verkehrsteilnehmers (4-1) mittels der abgerufenen historischen Daten und der aktuellen Verkehrssituation vorhergesagt wird und
ein Steuersignal zum Unterstützen des Fahrers beim Führen des Fahrzeugs (1) in Abhängigkeit von dem vorhergesagten Fahrmanöver des zweiten Verkehrsteilnehmers (4-1) erzeugt wird,
**dadurch gekennzeichnet, dass**
die der Verkehrssituation zugeordnete Verkehrsregel mittels der historischen Daten aus vergangenen Fahrmanövern von Verkehrsteilnehmern gewonnen wird, wobei die Verkehrsregel aus den erfassten Fahrmanövern abgeleitet wird.

2. Computerimplementiertes Verfahren nach Anspruch 1,
**dadurch gekennzeichnet, dass**
zum Erzeugen der historischen Daten für einen geographischen Bereich zumindest innerhalb eines Zeitintervalls mehrfach Bewegungsdaten einer Vielzahl von Verkehrsteilnehmern erfasst werden,
auf Basis der erfassten Bewegungsdaten der Vielzahl von Verkehrsteilnehmern Verkehrssituationen in dem geographischen Bereich analysiert werden und den Verkehrssituationen zugeordnete Fahrmanöver ermittelt werden und
die ermittelten Fahrmanöver in Verbindung mit den ermittelten Verkehrssituationen als historische Daten gespeichert werden.

3. Computerimplementiertes Verfahren nach Anspruch 1 oder 2,
**dadurch gekennzeichnet, dass**
die historischen Daten in einer geographischen Karte gespeichert werden, welche die Fahrwege (3) sowie die für die Fahrwege (3) geltenden Verkehrsregeln und die in der Vergangenheit auf den Fahrwegen (3) von Verkehrsteilnehmern ausgeführten Fahrmanöver umfasst, und
für die bestimmte Verkehrssituation die geographische Karte mit den historischen Daten abgerufen wird.

4. Computerimplementiertes Verfahren nach einem der vorhergehenden Ansprüche,
**dadurch gekennzeichnet, dass**
zumindest eine der Verkehrsregeln eine Vorfahrtsregel ist.

5. Computerimplementiertes Verfahren nach einem der vorhergehenden Ansprüche,
**dadurch gekennzeichnet, dass**
bei der Vorhersage des Fahrmanövers des zweiten Verkehrsteilnehmers (4-1)die Bewegungsdaten des zweiten Verkehrsteilnehmers (4-1) mit Bewegungsdaten eines vergangenen Fahrmanövers eines Verkehrsteilnehmers verglichen werden, welcher in derselben Verkehrssituation war.

6. Computerimplementiertes Verfahren nach einem der vorhergehenden Ansprüche,
**dadurch gekennzeichnet, dass**
bei der Vorhersage des Fahrmanövers des zweiten Verkehrsteilnehmers (4-1) in Abhängigkeit von den Bewegungsdaten des zweiten Verkehrsteilnehmers (4-1) und der erfassten Verkehrssituation geprüft wird, ob der zweite Verkehrsteilnehmer (4-1) voraussichtlich die bestimmte Verkehrsregel befolgen wird.

7. Computerimplementiertes Verfahren nach einem der vorhergehenden Ansprüche,
**dadurch gekennzeichnet, dass**
für die Verkehrssituation in Abhängigkeit von dem vorhergesagten Fahrmanöver des zweiten Verkehrsteilnehmers (4-1) und/oder in Abhängigkeit von der bestimmten Verkehrssituation ein Zeitpunkt und/oder eine Position bestimmt wird, bei welchem oder bei welcher das Steuersignal erzeugt wird.

8. Computerimplementiertes Verfahren nach einem der vorhergehenden Ansprüche,
**dadurch gekennzeichnet, dass**
beim Erfassen des Umfelds des Fahrzeugs (1) ein Fahrverhalten des Fahrzeugs (1) und/oder anderer Verkehrsteilnehmer (4) analysiert wird.

9. Computerimplementiertes Verfahren nach einem der vorhergehenden Ansprüche,
**dadurch gekennzeichnet, dass**
für die Analyse des Fahrverhaltens anderer Verkehrsteilnehmer (4) Daten von dem anderen Verkehrsteilnehmer (4) an das Fahrzeug (1) übertragen werden.

10. Computerimplementiertes Verfahren nach Anspruch 9,
**dadurch gekennzeichnet, dass**
der zweite Verkehrsteilnehmer ein zweites Fahrzeug (4-1) ist,
Daten zu einer Betätigung einer Einrichtung des zweiten Fahrzeugs (4-1) an das Fahrzeug (1) übertragen werden und
bei der Vorhersage des Fahrmanövers des zweiten Fahrzeugs (4-1) die übertragenen Daten zur Betätigung einer Einrichtung des zweiten Fahrzeugs (4-1) berücksichtigt werden.

11. Computerimplementiertes Verfahren nach Anspruch 10,
**dadurch gekennzeichnet, dass**
die an das Fahrzeug (1) übertragenen Daten Betätigungen von Einrichtungen des zweiten Fahrzeugs (4-1) umfassen, welche Einfluss auf die Bewegung des Fahrzeugs (1) haben.

12. Computerimplementiertes Verfahren nach einem der vorhergehenden Ansprüche,
**dadurch gekennzeichnet, dass**
mittels des erzeugten Steuersignals die Bewegung des Fahrzeugs (1) automatisiert gesteuert wird.

13. Fahrassistenzsystem zum Unterstützen eines Fahrers eines Fahrzeugs beim Führen des Fahrzeugs umfassend:
eine Umfelderfassungseinrichtung (7) zum Erfassen des Umfelds des Fahrzeugs (1), die ausgebildet ist, den Verlauf von Fahrwegen (3) sowie Bewegungsdaten anderer Verkehrsteilnehmer (4) zu erfassen,
eine Analyseeinheit (9), die mit der Umfelderfassungseinrichtung (7) gekoppelt ist und die ausgebildet ist, das erfasste Umfeld des Fahrzeugs (1) zu analysieren und eine Verkehrssituation des Fahrzeugs (1) und zumindest eine Verkehrsregel für die Verkehrssituation des Fahrzeugs (1) in Beziehung zu zumindest einem zweiten Verkehrsteilnehmer (4-1) der erfassten anderen Verkehrsteilnehmer (4) zu bestimmen,
ein Speicher (18), in welchem historische Daten zu Fahrmanövern von Verkehrsteilnehmern für Verkehrssituationen gespeichert sind, wobei der Verkehrssituation eine Verkehrsregel zugeordnet ist,
eine Schnittstelle (11), die mit dem Speicher (18) gekoppelt ist, sodass für die bestimmte Verkehrssituation historische Daten zu Fahrmanövern von Verkehrsteilnehmern abrufbar sind,
einer Prädiktionseinheit (10), die mit der Analyseeinheit (9) und der Schnittstelle (11) gekoppelt ist und die ausgebildet ist, ein Fahrmanöver des zweiten Verkehrsteilnehmers (4-1) mittels der abgerufenen historischen Daten und der aktuellen Verkehrssituation vorherzusagen, und
eine Steuereinheit (13), die mit der Prädiktionseinheit (10) gekoppelt ist und die ausgebildet ist ein Steuersignal zum Unterstützen des Fahrers beim Führen des Fahrzeugs (1) in Abhängigkeit von dem vorhergesagten Fahrmanöver des zweiten Verkehrsteilnehmers (4-1) zu erzeugen,
**dadurch gekennzeichnet, dass**
die der Verkehrssituation zugeordnete Verkehrsregel mittels der historischen Daten aus vergangenen Fahrmanövern von Verkehrsteilnehmern gewonnen worden ist, wobei die Verkehrsregel aus den erfassten Fahrmanövern abgeleitet wird.

## Claims

1. Computer-implemented method for assisting a driver of a vehicle (1) during driving of the vehicle (1), in which the surroundings of the vehicle (1) are acquired, wherein the surroundings acquisition comprises the course of roads (3) and movement data of other road users (4), wherein historical data are retrieved for the acquired surroundings, these data having been obtained at least from past driving manoeuvres of road users in these surroundings,
the acquired surroundings of the vehicle (1) are analysed and a traffic situation of the vehicle (1) in relation to at least one second road user (4-1) of the acquired other road users (4) is determined, wherein the traffic situation is assigned a traffic rule,
a provisional driving manoeuvre of the second road user (4-1) is predicted by way of the retrieved historical data and the current traffic situation and
a control signal for assisting the driver during driving of the vehicle (1) is generated on the basis of the predicted driving manoeuvre of the second road user (4-1),
**characterized in that**
the traffic rule assigned to the traffic situation is obtained by way of the historical data from past driving manoeuvres of road users, wherein the traffic rule is derived from the acquired driving manoeuvres.

2. Computer-implemented method according to Claim 1,
**characterized in that**
movement data of a multiplicity of road users are acquired multiple times at least within a time interval in order to generate the historical data for a geographical region,
traffic situations in the geographical region are analysed on the basis of the acquired movement data of the multiplicity of road users and driving manoeuvres assigned to the traffic situations are ascertained and the ascertained driving manoeuvres are stored in connection with the ascertained traffic situations in the form of historical data.

3. Computer-implemented method according to Claim 1 or 2,
**characterized in that**
the historical data are stored in a geographical map that comprises the roads (3) and the traffic rules applicable to the roads (3) and the driving manoeuvres performed in the past on the roads (3) by road users, and
the geographical map containing the historical data is retrieved for the determined traffic situation.

4. Computer-implemented method according to one of the preceding claims,
**characterized in that**
at least one of the traffic rules is a right-of-way rule.

5. Computer-implemented method according to one of the preceding claims,
**characterized in that,**
in the prediction of the driving manoeuvre of the second road user (4-1), the movement data of the second road user (4-1) are compared with movement data of a past driving manoeuvre of a road user who was in the same traffic situation.

6. Computer-implemented method according to one of the preceding claims,
**characterized in that,**
in the prediction of the driving manoeuvre of the second road user (4-1), a check is performed, on the basis of the movement data of the second road user (4-1) and the acquired traffic situation, as to whether the second road user (4-1) will provisionally follow the determined traffic rule.

7. Computer-implemented method according to one of the preceding claims,
**characterized in that**
a time and/or a position at which the control signal is generated is determined for the traffic situation on the basis of the predicted driving manoeuvre of the second road user (4-1) and/or on the basis of the determined traffic situation.

8. Computer-implemented method according to one of the preceding claims,
**characterized in that**
a driving behaviour of the vehicle (1) and/or of other road users (4) is analysed when acquiring the surroundings of the vehicle (1).

9. Computer-implemented method according to one of the preceding claims,
**characterized in that**
data are transmitted from the other road user (4) to the vehicle (1) for the analysis of the driving behaviour of other road users (4).

10. Computer-implemented method according to Claim 9, **characterized in that**
the second road user is a second vehicle (4-1),
data regarding actuation of a device of the second vehicle (4-1) are transmitted to the vehicle (1), and the transmitted data regarding the actuation of a device of the second vehicle (4-1) are taken into consideration when predicting the driving manoeuvre of the second vehicle (4-1).

11. Computer-implemented method according to Claim 10,
**characterized in that**
the data transmitted to the vehicle (1) comprise actuations of devices of the second vehicle (4-1) that influence the movement of the vehicle (1).

12. Computer-implemented method according to one of the preceding claims,
**characterized in that**
the movement of the vehicle (1) is controlled automatically by way of the generated control signal.

13. Driver assistance system for assisting a driver of a vehicle during driving of the vehicle, comprising:
a surroundings acquisition device (7) for acquiring the surroundings of the vehicle (1), which is designed to acquire the course of roads (3) and movement data of other road users (4),
an analysis unit (9) that is coupled to the surroundings acquisition device (7) and that is designed to analyse the acquired surroundings of the vehicle (1) and to determine a traffic situation of the vehicle (1) and at least one traffic rule for the traffic situation of the vehicle (1) in relation to at least one second road user (4-1) of the acquired other road users (4),
a memory (18) storing historical data regarding driving manoeuvres of road users for traffic situations, wherein the traffic situation is assigned a traffic rule,
an interface (11) that is coupled to the memory (18), such that historical data regarding driving manoeuvres of road users are able to be retrieved for the determined traffic situation,
a prediction unit (10) that is coupled to the analysis unit (9) and the interface (11) and that is designed to predict a driving manoeuvre of the second road user (4-1) by way of the retrieved historical data and the current traffic situation, and
a control unit (13) that is coupled to the prediction unit (10) and that is designed to generate a control signal for assisting the driver during the driving of the vehicle (1) on the basis of the predicted driving manoeuvre of the second road user (4-1),
**characterized in that**
the traffic rule assigned to the traffic situation has been obtained by way of the historical data from past driving manoeuvres of road users, wherein the traffic rule is derived from the acquired driving manoeuvres.

## Revendications

1. Procédé mis en œuvre par ordinateur permettant d'assister un conducteur d'un véhicule (1) à la conduite du véhicule (1), dans lequel
l'entourage du véhicule (1) est détecté, la détection d'entourage comprenant le tracé des voies de circulation (3) ainsi que des données de déplacement d'autres usagers de la route (4), dans lequel
pour l'entourage détecté, des données historiques sont extraites qui ont été obtenues au moins à partir de manœuvres de conduite antérieures des usagers de la route dans cet entourage,
l'entourage détecté du véhicule (1) est analysé, et une situation de circulation du véhicule (1) est déterminée par rapport à au moins un deuxième usager de la route (4-1) des autres usagers de la route (4) détectés, une règle de circulation étant associée à la situation de circulation,
une manœuvre de conduite probable du deuxième usager de la route (4-1) est prédite au moyen des données historiques extraites et de la situation de circulation actuelle, et
un signal de commande permettant d'assister le conduire à la conduite du véhicule (1) est généré en fonction de la manœuvre de conduite prédite du deuxième usager de la route (4-1),
**caractérisé en ce que** la règle de circulation associée à la situation de circulation est obtenue au moyen des données historiques provenant de manœuvres de conduite antérieures des usagers de la route, la règle de circulation étant déduite des manœuvres de conduite détectées.

2. Procédé mis en œuvre par ordinateur selon la revendication 1, **caractérisé en ce que**
pour la génération des données historiques pour une zone géographique, au moins à l'intérieur d'un intervalle de temps, des données de déplacement d'une pluralité d'usages de la route sont détectées à plusieurs reprises,
sur la base des données de déplacement détectées de la pluralité d'usagers de la route, des situations de circulation dans la zone géographique sont analysées et des manœuvres de conduite associées aux situations de circulation sont établies, et
les manœuvres de conduite établies sont stockées sous forme de données historiques, en relation avec les situations de circulation établies.

3. Procédé mis en œuvre par ordinateur selon la revendication 1 ou 2, **caractérisé en ce que**
les données historiques sont stockées sur une carte géographique qui comprend les voies de circulation (3) ainsi que les règles de circulation valables pour les voies de circulation (3), et les manœuvres de conduite effectuées par les usagers de la route sur les voies de circulation (3) dans le passé, et
la carte géographique avec les données historiques est extraite pour la situation de circulation déterminée.

4. Procédé mis en œuvre par ordinateur selon l'une quelconque des revendications précédentes, **caractérisé en ce qu'**au moins l'une des règles de circulation est une règle de priorité.

5. Procédé mis en œuvre par ordinateur selon l'une quelconque des revendications précédentes, **caractérisé en ce que** lors de la prédiction de la manœuvre de conduite du deuxième usager de la route (4-1), les données de déplacement du deuxième usager de la route (4-1) sont comparées avec des données de déplacement d'une manœuvre de conduite antérieure d'un usager de la route qui s'est trouvé dans la même situation de circulation.

6. Procédé mis en œuvre par ordinateur selon l'une quelconque des revendications précédentes, **caractérisé en ce que** lors de la prédiction de la manœuvre de conduite du deuxième usager de la route (4-1), en fonction des données de déplacement du deuxième usager de la route (4-1) et de la situation de circulation détectée, on vérifie si le deuxième usager de la route (4-1) respectera probablement la règle de circulation déterminée.

7. Procédé mis en œuvre par ordinateur selon l'une quelconque des revendications précédentes, **caractérisé en ce que** pour la situation de circulation, en fonction de la manœuvre de conduite prédite du deuxième usager de la route (4-1) et/ou en fonction de la situation de circulation déterminée, on détermine un instant et/ou une position auquel/à laquelle le signal de commande est généré.

8. Procédé mis en œuvre par ordinateur selon l'une quelconque des revendications précédentes, **caractérisé en ce que** lors de la détection de l'entourage du véhicule (1), un comportement de conduite du véhicule (1) et/ou des autres usagers de la route (4) est analysé.

9. Procédé mis en œuvre par ordinateur selon l'une quelconque des revendications précédentes, **caractérisé en ce que** pour l'analyse du comportement de conduite des autres usagers de la route (4), des données de l'autre usager de la route (4) sont transmises au véhicule (1).

10. Procédé mis en œuvre par ordinateur selon la revendication 9, **caractérisé en ce que**
le deuxième usager de la route est un deuxième véhicule (4-1),
des données concernant un actionnement d'un équipement du deuxième véhicule (4-1) sont transmises au véhicule (1), et
lors de la prédiction de la manœuvre de conduite du deuxième véhicule (4-1), les données transmises concernant l'actionnement d'un équipement du deuxième véhicule (4-1) sont prises en compte.

11. Procédé mis en œuvre par ordinateur selon la revendication 10, **caractérisé en ce que** les données transmises au véhicule (1) comprennent des actionnements d'équipements du deuxième véhicule (4-1) qui ont une influence sur le déplacement du véhicule (1).

12. Procédé mis en œuvre par ordinateur selon l'une quelconque des revendications précédentes, **caractérisé en ce que** le déplacement du véhicule (1) est commandé de manière automatisée au moyen du signal de commande généré.

13. Système d'assistance au conducteur permettant d'assister un conducteur d'un véhicule à la conduite du véhicule, comprenant :
un équipement de détection d'entourage (7) permettant de détecter l'entourage du véhicule (1), qui est réalisé pour détecter le tracé de voies de circulation (3) ainsi que des données de déplacement d'autres usagers de la route (4),
une unité d'analyse (9) qui est couplée à l'équipement de détection d'entourage (7) et qui est réalisée pour analyser l'entourage détecté du véhicule (1) et pour déterminer une situation de circulation du véhicule (1) et au moins une règle de circulation pour la situation de circulation du véhicule (1) par rapport à au moins un deuxième usager de la route (4-1) des autres usagers de la route (4) détectés,
une mémoire (18) dans laquelle sont stockées des données historiques concernant des manœuvres de conduite d'usagers de la route pour des situations de circulation, une règle de circulation étant associée à la situation de circulation,
une interface (11) qui est couplée à la mémoire (18) de sorte que des données historiques concernant des manœuvres de conduite des usagers de la route peuvent être extraites pour la situation de circulation déterminée,
une unité de prédiction (10) qui est couplée à l'unité d'analyse (9) et à l'interface (11) et qui est réalisée pour prédire une manœuvre de conduite du deuxième usager de la route (4-1) au moyen des données historiques extraites et de la situation de circulation actuelle, et
une unité de commande (13) qui est couplée à l'unité de prédiction (10) et qui est réalisée pour générer un signal de commande permettant d'assister le conducteur à de la conduite du véhicule (1) en fonction de la manœuvre de conduite prédite du deuxième usager de la route (4-1),
**caractérisé en ce que** la règle de circulation associée à la situation de circulation est obtenue au moyen des données historiques provenant de manœuvres de conduite antérieures des usagers de la route, la règle de circulation étant déduite des manœuvres de conduite détectées.
